(19) **Europäisches Patentamt**
**European Patent Office**
**Office européen des brevets**

(11) **EP 2 798 367 B1**

(12) **EUROPEAN PATENT SPECIFICATION**

(45) Date of publication and mention
of the grant of the patent:
**28.02.2018 Bulletin 2018/09**

(21) Application number: **12844646.5**

(22) Date of filing: **21.12.2012**

(51) Int Cl.:
*G01S 5/02* ^(2010.01)          *G01S 13/74* ^(2006.01)
*G01S 13/76* ^(2006.01)         *G01S 5/14* ^(2006.01)
*G01S 5/06* ^(2006.01)

(86) International application number:
**PCT/IB2012/003119**

(87) International publication number:
**WO 2013/098656 (04.07.2013 Gazette 2013/27)**

(54) **METHODS AND SYSTEMS FOR LOCATING DEVICES**

VERFAHREN UND SYSTEME ZUR LOKALISIERUNG VON VORRICHTUNGEN

PROCÉDÉS ET SYSTÈMES POUR LA LOCALISATION DE DISPOSITIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2011 US 201161580783 P**

(43) Date of publication of application:
**05.11.2014 Bulletin 2014/45**

(73) Proprietor: **Aeroscout Ltd**
**76702 Rehovot (IL)**

(72) Inventor: **ALJADEFF, Daniel**
**Kiriat Ono (IL)**

(74) Representative: **SBD IPAdmin**
**210 Bath Road**
**Slough, Berkshire SL1 3YD (GB)**

(56) References cited:
**WO-A1-92/05672**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The disclosed embodiments relate to network communications and, more particularly, to methods and systems for locating devices in a wireless network.

Background of the Disclosure

The ability to locate devices in wireless networks is important in many applications and industries. As a result, many network providers offer locating services to their customers, such as the ability to identify the geographic location of a customer's hand held device. Many industries rely on locating abilities. For example, medical environments rely on the ability to locate personnel, equipment, and devices to ensure timely response to situations. Industrial and manufacturing environments rely on the location of tagged equipment or devices to ensure that business and manufacturing processes are performed properly and efficiently.

In such dynamic environments, the location of a device may change quickly and often. Determining the location of such a device may require network components that seek information from the device. For example, in some configurations, network components may be installed in specific locations within a wireless network. When the location of a device is sought, all of the network components may be employed to assist in finding the location of the device. In other configurations, a subset of the components may be used. And while the location of the device may eventually be determined, the determination is performed with a degree of network communication and processing beyond what is necessary to provide sufficient location information to determine the location of the device. For instance, in scenarios where a mobile device issues requests to the network, all network components within range of the device may respond to the request and perform known network communication calculations to assist in locating the device. But such configurations may require the services of one or more components that are not necessary. For example, other components may have already performed processes sufficient to locate the device.

WO9205672 discloses locating a mobile station using trilateration. Base stations are selected upon signal strengths.

Accordingly, an improved approach to locating devices in wireless networks is needed. Methods and systems consistent with the disclosed embodiments address one or more of the problems set forth above.

Summary of the Disclosure

The disclosed embodiments include a computer-implemented method for locating a device in a wireless network. In one aspect, the method may include receiving, by a network component, a signal from the device and measuring a received signal strength of the signal. The method may also comprise determining whether to perform a round trip time (RTT) measurement with the device based on the received signal strength and at least one parameter. The method may further comprise performing the RTT measurement with the device based on the determination, and providing a result of the RTT measurement to a server for determining a location of the device.

The disclosed embodiments also include a network component configured for locating a device in a wireless network. In one aspect, the network component may include at least one memory device storing instructions and at least one processor which, when executing the instructions, is configured to receive a signal from the device. The processor, when executing the instructions, may also be configured to measure a received signal strength of the signal and determine whether to perform a round trip time (RTT) measurement with the device based on the received signal strength and at least one parameter. The processor, when executing the instructions, may be further configured to perform the RTT measurement with the device based on the determination, and provide a result of the RTT measurement to a server for determining a location of the device.

It is to be understood that the disclosed embodiments are not limited to the details of construction and to the arrangements set forth in the following description or illustrated in the drawings. The disclosed embodiments may include additional aspects in addition to those described and is capable of being practiced and carried out in various ways. Also, it is to be understood that the phraseology and terminology employed herein, as well as in the abstract, are for the purpose of description and should not be regarded as limiting.

The accompanying drawings, which are incorporated and constitute part of the specification, illustrate certain embodiments of the disclosure, and together with the description, serve to explain exemplary principles of the disclosed embodiments.

As such, those skilled in the art will appreciate that the conception upon which this disclosure is based may readily be utilized as a basis for designing other structures, methods, and/or systems for carrying out the several purposes of the present disclosure. It is important, therefore, to recognize that the claims should be regarded as including such equivalent constructions insofar as they do not depart from the spirit and scope of the present disclosure.

Brief Description of the Drawings

The accompanying drawings, which are incorporated in and constitute a part of this specification, illustrate various exemplary aspects of the disclosure and, together with the description, explain disclosed principles.

FIG. 1A is a diagram illustrating an exemplary system that may be used to implement aspects of the disclosure.

FIG. 1B is a diagram illustrating another exemplary system that may be used to implement aspects of the disclosure.

FIG. 2 is a flow diagram illustrating an exemplary process consistent with aspects of the disclosure.

FIG. 3 is a flow diagram illustrating another exemplary process consistent with aspects of the disclosure.

FIG. 4 is a flow diagram illustrating a further exemplary process consistent with aspects of the disclosure.

FIG. 5 is a timing diagram illustrating an exemplary process where a network component may perform an active RTT measurement using an RTS/CTS sequence, consistent with aspects of the disclosure.

FIG. 6 is a timing diagram illustrating an exemplary process where multiple network components may perform active and passive RTT measurements using a Probe Request/Probe Response/ACK message sequence, consistent with aspects of the disclosure.

FIG. 7 is a timing diagram illustrating an exemplary process where multiple network components may perform active RTT measurements using a Probe Request/Probe Response/ACK message sequence, consistent with aspects of the disclosure.

FIG. 8 is a diagram of an exemplary network component consistent with aspects of the disclosure.

<u>Detailed Description</u>

Reference will now be made in detail to the present embodiments of the disclosure, certain examples of which are illustrated in the accompanying drawings.

The methods and systems consistent with the disclosed embodiments may determine a location of a device in a wireless network based on one or more predetermined and/or dynamically configured parameters, rules, measurements, and/or statistics. In one aspect, the device may be a wireless mobile device, such as a mobile phone, mobile tag, or laptop. In one embodiment, a wireless network is disclosed that includes multiple network components, such as access points (APs), at least one of which may dynamically and in real-time (or near real-time) determine whether to perform, or otherwise participate in, locating processes for locating the device in the wireless network.

In certain embodiments, at least one network component, such as an AP, performs a process to measure a distance to the device based on at least one of a network characteristic or parameter. The at least one network characteristic or parameter may be preprogrammed, dynamically adjusted by one or more network components, and/or sent by the device. In one embodiment, a set of network components may be configured to determine whether they are to participate in a location determining process for the device and/or to perform processes to measure a distance to the device based on determined criteria. One or more of the network components may be configured to collect information regarding a distance to the device in real-time, or near real-time. The one or more of the network components may also be configured to report the distance information to one or more other components, such as a computer (e.g., a server) that may be configured to determine the location of the device in the area covered by the wireless network.

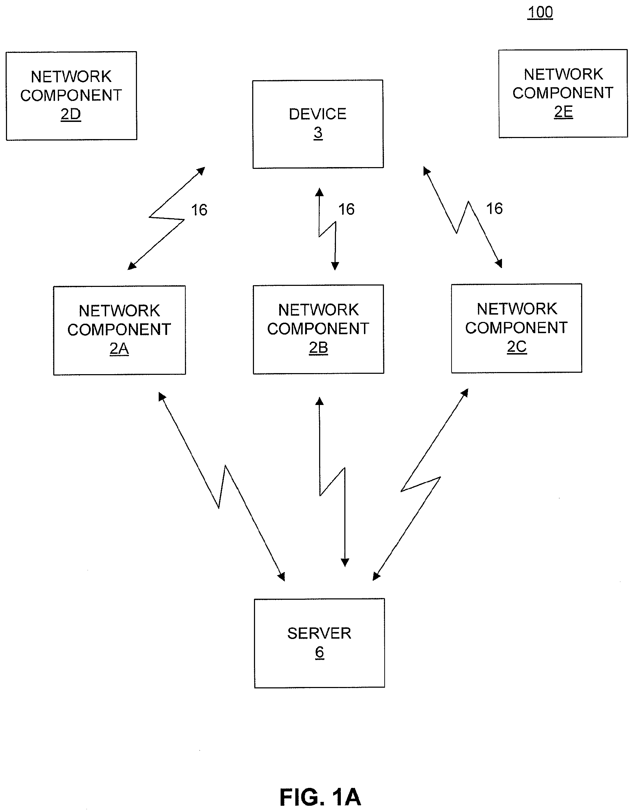

FIG. 1A is a diagram illustrating an exemplary system 100 that may be used to implement aspects of the disclosure. The type, number, and arrangement of devices, components, and elements illustrated in FIG. 1A may vary consistent with the disclosed embodiments.

In one embodiment, system 100 may include at least one wireless network, one or more devices 3, one or more network components 2 (the exemplary illustration of FIG. 1A depicting the one or more network components 2 as components 2A-2E), and a server 6. In one exemplary embodiment, the wireless network may be an IEEE 802.11x (e.g., IEEE802.11a/b/g/n) network, a Wi-Fi network, or any other known wireless network that facilitates wireless communications between elements.

Device 3 may include one or more devices that are configured to send and/or receive wireless communications in the wireless network. For example, device 3 may be one or more mobile phones, wireless tags, smart phones, personal digital assistants (PDAs), laptop computers, tablet computers, net books, and/or any other mobile device equipped with a transmitter and receiver for communicating over the wireless network.

One or more of network components 2A-2E may be a wireless network component that is configured to process information for wireless communications. In one aspect, the wireless network component may be an access point. The wireless network component may include one or more hardware elements, such as processors, and/or software elements, for implementing wireless communication mechanisms. The wireless communication mechanisms may enable the network component to send and receive data to/from device 3, process data received from device 3, and/or send/receive data to/from other network elements, such as server 6, in accordance with the disclosed embodiments.

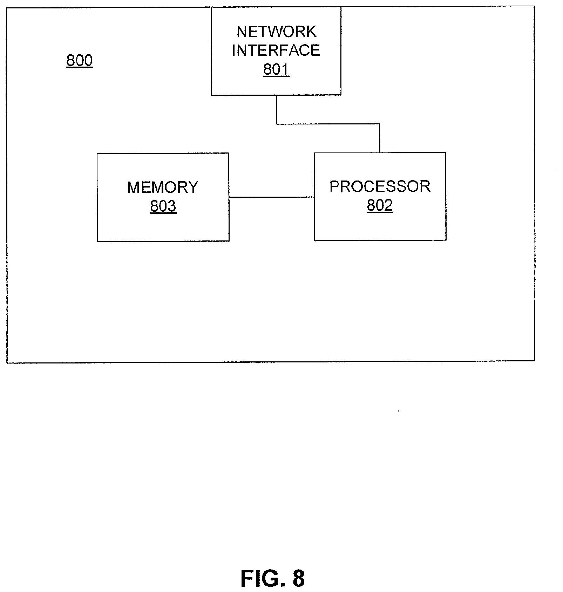

At least one of network components 2A-2E may include one or more processors that execute software and program instructions to perform one or more processes consistent with certain aspects of the disclosure. At least one of network components 2A-2E may also include one or more memory devices that store software and/or program instructions that, when executed by the processor(s) of components 2A-2E, perform those processes. Fig. 8, described below, depicts an exemplary network component consistent with aspects of the disclosure.

Server 6 may include one or more computers that perform server processes, such as sending and/or receiving information over a network, processing information, and/or producing results of processed data. In one embodiment, server 6 may be a computer system that is configured to receive information from elements in the wireless network, such as one or more of network components 2A-2E, to perform network processes, such as device or other element location processes. Server 6 may be configured to send commands and/or programming information to one or more of network components 2A-2E to program the functionality of those components. Server 6 may also be configured to receive measurement information from one or more of network components 2A-2E, process that information, and generate results of the processed information. For example, server 6 may be configured to execute software that determines the location of device 3 based on data received from one or more of network components 2A-2E.

Server 6 may be configured to perform other processes in accordance with aspects of the disclosed embodiments. Server 6 may include, for example, one or more processors that execute instructions to perform processes consistent with aspects of the disclosed embodiments. Server 6 may also include one or more memory devices that store software and/or program instructions that, when executed by the one or more processors of server 6, perform one or more processes, such as the location processes, consistent with aspects of the disclosure.

One or more of network components 2A-2E may receive signal 16 and measure RSSI (Received Signal Strength Indication) of signal 16. The one or more of network components 2A-2E may then send the RSSI measurements to server 6. In response, server 6 may determine whether the one or more network components that sent the RSSI measurement should perform an RTT measurement with device 3 based on one or more of the RSSI, one or more parameters associated with device 3, the network component that sent the RSSI measurement, network parameters, pre-programmed parameters, or any other parameter. Server 6 may determine that one or more of network components 2A-2E should perform an RTT measurement, and may send an instruction to the determined one or more network components. Also, server 6 may be configured to receive RTT measurements from the one or more network components to determine the location of device 3.

System 100 may be a wireless network system that may be implemented in different environments for different applications. For example, system 100 may include a wireless network with access points located in different geographic locations. System 100 may be used, for example, in an outdoor environment, a warehouse environment, a building with different floors, or a tunnel, though the disclosure is not so limited.

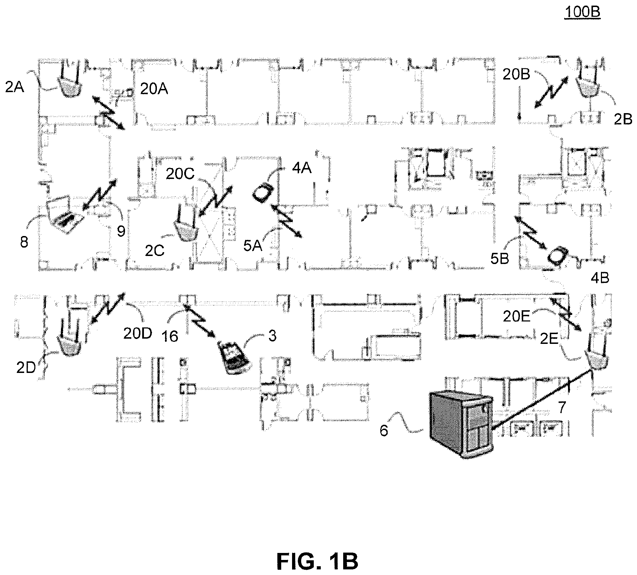

FIG. 1B illustrates an exemplary system 100B that is similar to system 100 implemented in a building environment. As shown, system 100B includes a wireless network on a floor of a building, although system 100B may span multiple floors or exist in any other environment, including outdoor environments. As shown, system 100B includes network components 2A-2E, mobile device 3, wireless tags 4A-4B, server 6, and laptop 8. Mobile device 3, wireless tags 4A-4B, and laptop 8 are examples of device 3, as described in connection with FIG. 1A. Elements of system 100B may send and/or receive communication signals, such as signal 16 (from mobile device 3), signal 9 (from laptop 8), signal 20A (to/from network component 2A), signal 20B (to/from network component 2B), signal 20C (to/from network component 2C), signal 20D (to/from network component 2D), signal 20E (to/from network component 2E), signal 7 (to/from component 2E, which for the sake of drawing simplicity represents links between network components 2A-2E and server 6), signal 5A (to/from wireless tag 4A), and signal 5B (to/from wireless tag 4B). The number of elements, components, devices, and signals shown in Fig. 1B is exemplary and not intended to be limiting. In certain aspects, system 100B operates consistent with the processes and elements described herein in connection with system 100 of Fig. 1A, and the disclosed embodiments.

According to an exemplary embodiment, device 3 may be configured to broadcast a wireless signal 16, which may be received by at least one of the one or more network components 2A-2E. Device 3 may broadcast multiple signals at different times from different locations depending on the movement of device 3. In certain embodiments, device 3 may be configured to automatically and periodically send broadcast signal 16, and/or to do so in response to an instruction from an external device, such as a network component 2A-2E or server 6, another network device, or a user. In one aspect, one or more of network components 2A-2E may be in wireless communication range of device 3. For example, as shown in FIG. 1A, network components 2A-2C may be within such a range and may receive the broadcast signal 16. As further illustrated in the example of FIG. 1A, network components 2D and 2E may not be within communication range of device 3, and so may not receive signal 16.

In one aspect, wireless signal 16 may be a Wi-Fi Probe Request message, or a broadcast data message, but the disclosure is not so limited. Signal 16 may include information that may be used by one or more of network components 2A-2C, or any other component within range to receive signal 16, to perform processes consistent with the disclosed embodiments. For example, signal 16 may include a requested quality of location measurement value that identifies a requested accuracy threshold for identifying the location of device 3. Alternatively, or additionally, signal 16 may include map identification (map ID) information or cell identification (cell ID) information relating to the position of device 3. The map ID information and/or cell ID information may describe a floor of a building in which the device is located or a specific zone within an area. The map ID information and/or cell ID information may be used by a network component located on a different floor than the device to determine not to perform an RTT measurement. For example, the map ID information and/or cell ID information may indicate to a network component that a large measurement error is expected or that priority should be given to network components on the same floor as device 3.

In one aspect, a network component receiving broadcast signal 16 may process the information included in the signal and may measure the RSSI of signal 16. Based on the measured RSSI and/or at least one parameter (described below), one or more of network components 2A-2E may determine whether to perform an active RTT measurement with device 3.

In another embodiment, each network component that receives signal 16 may forward information included in signal 16 and/or the RSSI of signal 16 to server 6. In response, server 6 may determine whether one or more of the network components should perform an RTT measurement of device 3. Server 6 may then generate and send instructions to the one or more network components that are determined to perform the RTT measurement.

In one aspect, server 6 may be configured to send information (including instructions or commands) to one or more network components, such as one or more of network components 2A-2E, identifying the network components that have been selected to perform an RTT measurement of device 3. In one aspect, server 6 may send the instructions to the network components that provided the RSSI data of device 3. The instructions may include data that identifies the network components to perform the RTT measurement, different parameters related to the RTT measurements, time stamp information reflecting a time when the server provided the instructions, and/or other information. In one aspect, server 6 may send this information to other network components in the wireless network.

As explained above, in certain embodiments, one or more of network components 2A-2E may be configured to determine whether to perform an RTT measurement based on the RSSI of signal 16 and/or one or more parameters. In one embodiment, one or more parameters may be stored in one or more of network components 2A-2E. Alternatively or additionally, one or more of network components 2A-2E may be preprogrammed with one or more parameters according to a location of the network component in the wireless network, such as an area of a floor in a building. Server 6 may also program one or more of network components 2A-2E with a new parameter, or may reprogram an existing parameter, by providing information over the wireless network. In still another aspect, device 3 may store a parameter and send the parameter to one or more of network components 2A-2E.

One or more of network components 2A-2E may determine whether to perform an RTT measurement based on a combination of parameters. For example, the one or more network components may determine whether to perform an RTT measurement based on a combination of a measured RSSI of signal 16, a requested quality of location measurement, and a number of network components, which have already performed an RTT measurement. As another example, the determination of whether to perform an RTT measurement may be based on a combination of a measured RSSI of signal 16, a network load, and a requested quality of location measurement. As a further example, the determination may be based on a combination of a measured RSSI of signal 16, a map or cell ID, and a requested quality of location measurement. The use of different combinations of parameters may allow the location determination system to be tailored to specific applications, deployment types, network conditions, or device types.

A parameter may include, for example, (1) location information of device 3; (2) data reflecting a need to perform an active RTT measurement if one or more other network components have already performed an RTT measurement on broadcast signal 16; (3) data reflecting a quality level of the location determination requested by device 3, server 6, or one or more of network components 2A-2E; (4) network load information; (5) information regarding characteristics of device 3; (6) dilution counter information; (7) information indicating whether one or more of network components 2A-2E are only able to receive broadcast signal 16, or can also receive signals transmitted by other network components; (8) information indicating whether the RSSI of signal 16 received by the one or more network components 2A-2E is greater than the RSSI of the signal received from one or more other network components 2A-2E which already performed an active RTT measurement; (9) information reflecting a distance of one or more of network components 2A-2E from device 3; (10) information reflecting network components which have previously performed RTT measurements for the same device 3; and/or (11) a list of network components to perform an RTT measurement.

Parameter (1) may include map ID information or cell ID information. This information may be transmitted by device 3, and may identify an area or region in which the device 3 is located. Parameter (2) may, for example, define a maximum number of active RTT measurements to perform for a device 3. Once the maximum number of active RTT measurements has been reached, other network components may be prevented from performing additional RTT measurements. This may help to control a level of network traffic in areas with many network components. Parameter (3) may define a level of quality of the location determination requested by device 3, server 6, or one or more of network components 2A-2E.

Parameter (4) may, for example, define criteria for performing an active RTT measurement by one or more of network components 2A-2E. These criteria may vary dynamically depending on a current network traffic load in an area and/or a communication load of a specific network element, device, or component. By defining such criteria, it may be possible to control an impact of an RTT measurement on network activity. Parameter (5) may define, for example, a type of device 3, such as whether it is a power saving device, laptop, or mobile tag. System 100 may vary a number of active RTT measurements to perform based on the type of a device 3. For example, a number of active RTT measurements to perform on a power saving device may be smaller than a number of active RTT measurements to perform on a normal laptop computer. As another example, active RTT measurements for a power saving device may be performed with less delay than those performed with a normal device in order to save battery power of the power saving device.

Parameter (6) may, for example, include an internal dilution counter. The internal dilution counter may cause one or more of network components 2A-2E to reduce a number of active RTT measurements to perform based on a load of RTT measurements on the one or more network components. Parameter (7) may include information indicating whether one or more of network components 2A-2E are only able to receive broadcast signal 16, or can also receive signals transmitted by other network components. A network component that cannot receive signals from other network components in the network may not be able to perform a passive RTT measurement. Such a network component may use parameter 7 to determine that it has to perform an active RTT measurement with device 3.

Parameter (8) may include information regarding whether an RSSI of signal 16 received by one or more of network components 2A-2E is greater than the RSSI of signal 16 received by one or more other network components 2A-2E. In one embodiment, the one or more other network components 2A-2E may have already performed an active RTT measurement for device 3. The disclosed embodiments may use parameter 8, for example, to determine whether or not a network component should perform an active RTT measurement, and/or a sequential order in which a network component should perform an active RTT measurement for device 3.

Parameter (9) may include information reflecting a distance of one or more of network components 2A-2E from device 3. This information may be relative to a distance from a previous measurement. A network element may use this information, for example, to determine whether to perform an RTT measurement. This determination may be based on whether the device is moving closer or further from a network component. For example, a network component may determine whether a device is moving closer or further from the network component based on a difference in RSSI of device 3 at a first time N and a second time N-1. If the difference is greater than a determined threshold, the network component may determine that the device has moved closer or farther from the network component.

Parameter (10) may define network components that have previously performed RTT measurements for the same device 3. This information may be used in combination with other parameters, such as in combination with RSSI information, to calculate the location of device 3. Thus, by using a combination of parameter 10 and RSSI information, at least a portion of the same network components may be used to perform the location measurement each time the calculation is performed, which may result in more accurate and stable location calculation results. Parameter 10 may also be used to select different network components in consecutive location measurements. By doing so, greater diversity in the RTT measurements can be achieved, thus reducing measurement errors that may occur from use of the same network components.

Parameter (11) may include a list of network components for performing an RTT measurement. The list may identify a number of network components that should perform the RTT measurement, and may sequentially order when each network component should perform the RTT measurement. For example, device 3 may receive signals from network components in the vicinity of device 3. Device 3 may measure the RSSI of these signals, and may order the network components for performing RTT measurement based on the strength of the RSSI of these signals. It may do so, for example, by ordering the network components so that a network component having the strongest RSSI measurement is scheduled to perform RTT measurement first, a network component having the second strongest RSSI measurement is scheduled to perform RTT measurement second, and so on.

In certain embodiments, one or more network components 2A-2E may include software or instructions stored on a memory device and executed by one or more processors. The software or instructions, when executed, may configure the one or more network components 2A-2E to execute processes that use one or more of the parameters in one or more rules to determine whether it is a network component that should perform an RTT measurement based on broadcast signal 16. One or more of network components 2A-2E may be preconfigured with one or more of such rules, and/or may receive one or more rules from server 6 and/or other network components.

The one or more rules may be configured as software processes or instructions that, when executed by a processor, provide a determination of whether the one or more network components 2A-2E should perform an RTT measurement of device 3. In this way, one or more network components 2A-2E in system 100 may be configured to dynamically, and in real-time or near real-time, determine whether it will participate in a device locating process that uses one or more network components 2A-2E and server 6. In one embodiment, each of the network components 2A-2E may be configured to perform this determination.

One or more of network components 2A-2E may be configured to determine whether to perform an RTT measurement based on a location of the one or more network components. For example, determining whether to perform an RTT measurement may be based on a parameter including location information about a floor of a building that device 3 is located on when signal 16 is broadcast. One or more of network components 2A-2E may include a rule indicating that it should not perform an RTT measurement on signal 16 if it determines that device 3 is not on the same floor of a building as the network component 2A-2E when it received signal 16. As another example, a rule may configure a network component to use the RSSI of signal 16 and a threshold value to determine whether it should perform an RTT measurement. The network component may, for example, only perform an RTT measurement if the RSSI of signal 16 meets or exceeds a threshold level. In one embodiment, a network component may implement a rule that limits the number of network components that perform RTT measurements for a network device 3. For instance, a rule may configure a network component so that if five network components are already performing RTT measurements (or had already performed RTT measurements), no additional network components would perform RTT measurement.

In another embodiment, a network component may implement a rule that delays the start of an active RTT measurement. The network component may implement the rule based on an RSSI measurement of signal 16. For example, if the RSSI measurement is not very strong, delaying the start of an RTT measurement may allow other network components with higher RSSI measurements to perform RTT measurements before the network component having the lower RSSI measurement. By allowing network components with the strongest RSSI measurements to complete the RTT measurements first, the location of device 3 can be determined more quickly.

As mentioned above, if a network component 2A-2E determines based on the RSSI of signal 16 and/or one or more parameters (and the rule(s) applying this information), that it is to perform an RTT measurement (active or passive), the network component 2A-2E will perform the RTT measurement in accordance with known processes for doing so. An RTT measurement between a network component and a device may be performed by a sequence of wireless messages exchanged between the two units. For example, if the sequence is initiated by the network component, then a first message is transmitted by the network component and received by the device. The network component stamps the time of transmission of the message (e.g., the time a first bit of the message header was transmitted) and the device stamps the time of arrival of the same message and using the same reference (i.e. the first bit in the header). After a short period of time, the device transmits back to the network component a second wireless message, which is received by the network component. The device stamps the time of transmission of the second wireless message and the network component stamps the time of arrival of the second wireless message.

The device may transfer the time elapsed between reception of the first message and transmission of the second message to the network component. This allows the network component to calculate the entire message propagation time, or the time for the message to propagate in both directions. This is the round trip time, which may be used to estimate a distance between the network component and the device assuming a propagation time to and from the device is equal or very similar.

RTT measurements may also be initiated by device 16. In other embodiments, a time interval between reception of the first message at the device and transmission of the second message from the device may be assumed to be constant among multiple RTT measurements from different network components. It may then be possible to estimate the device location without having to measure the time interval. In still other embodiments, the value of the time interval is known. Although the example of the RTT measurement described above comprises a sequence of two messages, RTT measurements may also comprise a sequence of more than two messages.

Network component 2A-2E may store results of an RTT measurement, and also may send RTT measurement data to server 6. Server 6 may be configured to use the results of the RTT measurement to estimate a location of device 3 using known wireless device locating processes based on RTT measurements and/or based on a combination of RTT measurements and other measurements, such as RSSI measurements or angle of arrival measurements. For example, RTT measurements from different network components may be converted to distances and then server 6 may estimate an intersection of multiple circles, each of the circles being centered at the device and having a radius equal to the measured distance. In another embodiment, RTT measurements may be used at one or more network components to estimate a time difference of arrival (TDOA) of a message transmitted by the device. The server may perform multilateration to estimate the location of the device.

The disclosed embodiments may also, in one example, combine a RTT distance measure with the direction of arrival at a network component of a message transmitted by the device. The disclosed embodiments may estimate a location of the device based on a known azimuth and the distance measure. In other embodiments, the location process may comprise using the RSSI of a signal measured by network components, the signal having been transmitted by the device, to filter or weigh RTT measurements of the network components.

In another embodiment, one or more network components 2A-2E may be configured as designated component(s) for determining a location of a device 3. In such an embodiment, the network components 2A-2E may send the RTT measurement results to the designated network component. For example, referring to FIG.

1A, network component 2E may be a designated component that is configured to perform locating processes for determining the location of device 3. Network component 2E would then, in the above example for FIG. 1A, receive the RTT measurements determined by network components 2A-2C. In another embodiment, device 3 or other devices, such as mobile device 8, may be designated components to determine the location of device 3. In such embodiments, the RTT measurements may be sent to the designated device(s) (e.g., device 3) over the wireless network and/or via any other communication means supported by the device(s).

In certain embodiments, the system may limit the number of network components 2A-2E that will perform an RTT measurement of device 3 based on signal 16. For instance, in one example, only network components 2A-2E having the highest RSSI measurements of signal 16 from device 3 may perform an RTT measurement. By limiting the number of network components 2A-2E involved in the RTT measurements, the disclosed embodiments may determine the location of device 3 very quickly. This allows the disclosed embodiments to reduce network load and to determine the location of device 3 using less network resources.

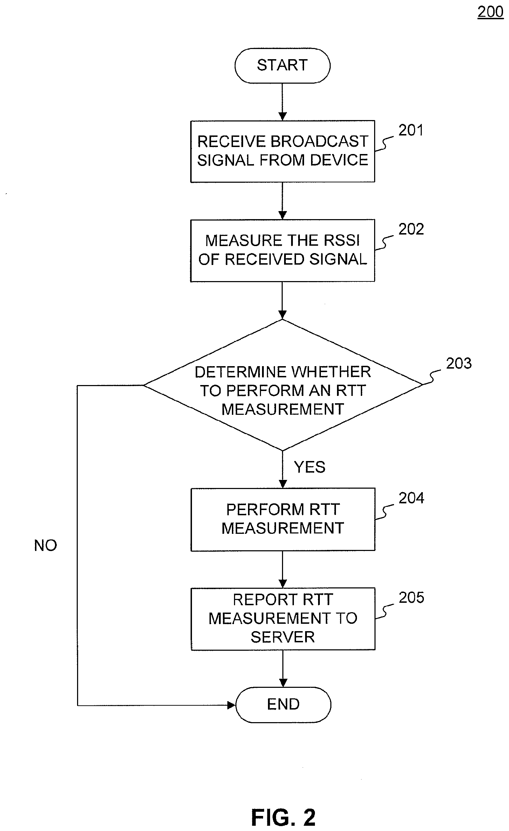

FIG. 2 shows a flow diagram of an exemplary device location process 200 performed by a network component, such as one or more of network components 2A-2E, consistent with the disclosed embodiments. In step 201, the network component may receive broadcast signal 16 sent by device 3, which may be a Probe Request message, for example.

In step 202, in response to receiving signal 16, network component 2A-2E may measure the RSSI of the received signal (Step 202). In step 203, the network component may determine whether to perform an RTT measurement based on the RSSI measurement and/or one or more parameters. In one embodiment, the network component may be configured to determine whether to perform an RTT measurement based on the RSSI of signal 16 and one or more parameters, as described above. For example, the network component may execute one or more rules, such as those described above, based on the RSSI of signal 16 and one or more parameters, to determine whether to perform an RTT measurement.

If the network component determines not to perform an RTT measurement, the process ends (Step 203; No). If the network component determines to perform the RTT measurement (Step 203; Yes), then in step 204, the network component may perform the RTT measurement. In step 205, the network component may report the RTT measurement results to server 6. Server 6 may then use the measurement, along with other RTT measurements received from other network components 2A-2E that may have performed an RTT measurement based on signal 16, to determine the location of device 3.

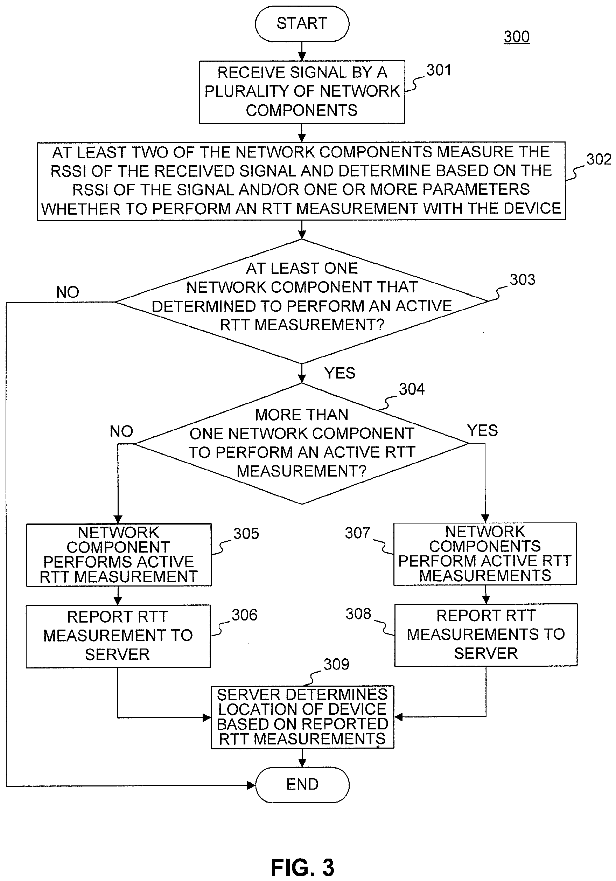

FIG. 3 depicts a flow diagram of an exemplary location process 300 consistent with disclosed embodiments. Process 300 illustrates a location process involving multiple network components of network components 2A-2E. In step 301, a signal broadcasted by device 3, such as a Probe Request message, may be received by a plurality of network components 2A-2E. In step 302, at least two of the network components 2A-2E may measure the RSSI of the received signal and determine whether to perform an RTT measurement for device 3 based on the RSSI and/or one or more parameters. In step 303, the disclosed embodiments determine whether at least one of the network components 2A-2E has determined to perform an RTT measurement. If so, then in step 304, the process includes determining whether more than one network component 2A-2E has decided to perform an active RTT measurement. If not (step 304; NO), then the network component that decided to perform the active RTT measurement may perform the active RTT measurement (step 305). In step 306, the network component may report the RTT measurement result to server 6. The process then proceeds to step 309.

Referring back to step 304, if more than one network component 2A-2E is to perform an RTT measurement (Step 304; YES), then each of the more than one component 2A-2E may perform the RTT measurement (Step 307). In one embodiment, the network components 2A-2E may perform the active RTT measurement in a sequence order that may be determined based on the RSSI signal and/or one or more parameters. The RTT measurements may be ordered by the network components participating in the RTT measurements, or by server 6. For example, the network component that measured the highest RSSI value may perform the active RTT measurement first, followed by a network component with the next highest measured RSSI value. In certain aspects, one or more of network components 2A-2E may share RSSI values they have determined with neighboring network components 2A-2E to facilitate the sequence order determination. Applying a rule, a network component may determine that its measured RSSI value is less than a calculated RSSI value of one or more neighboring network components 2A-2E, and thus defer RTT measurements until the other RTT measurements are complete. In another aspect, a neighboring network component may report when it has completed an RTT measurement and may share the RTT measurement value with the other neighboring network components 2A-2E.

One or more network components 2A-2E may report RTT measurement results to server 6 (Step 308). In one embodiment, each of the network components 2A-2E may report RTT measurement results to server 6. At step 309, server 6 may determine the location of device 3 based on the received RTT measurements (both active and passive RTT measurements as reported by the participating network components 2A-2E). In one embodiment, server 6 may, based on the RTT measurements, determine that the received RTT measurements are associated with a given device 3 in a given timeframe, to ensure that location calculations are performed using the proper RTT measurements. Server 6 may report the results of location calculations to a server, element, network component, device, or user, such as a user working with server 3. Following step 309, the process may end.

As explained above, the disclosed embodiments enable network components 2A-2E to consider one or more rules and/or one or more parameters and/or the RSSI of the broadcast signal 16 received from device 3 to determine whether to perform an RTT measurement. For example, one or more of network components 2A-2E may execute one or more rules, such as those described above, based on the RSSI of signal 16 and/or one or more parameters, to determine whether to perform an RTT measurement. One or more of network components 2A-2E may parse signal 16 to extract data reflecting a location of device 3, such as map ID information and/or cell ID information. This data may then be used as a parameter to determine whether to perform an RTT measurement. Thus, for example, a network component may determine not to perform an RTT measurement if it is not within a determined proximity of device 3 or if it is not within a particular location.

As another example, a network component may measure the RSSI of a signal transmitted from one or more other network components 2A-2E and/or the RSSI of signal 16 transmitted by device 3. The network component may then compare the RSSI that it measured for signal 16 against the RSSI measured for the signal by one or more of the other network components 2A-2E to determine whether to perform an RTT measurement. In one example, the network component may apply a rule such as: if RSSI (signal received from device) - RSSI (signal received from other network component) > TH1, (where TH1 is a determined threshold value programmed in one or more of network components 2A-2E, or reprogrammed in one or more of the network components via server 6), then determine that the network component is farther in distance from device 3 than the one or more other network components 2A-2E. Upon making this determination, the network component may determine that it should not perform an RTT measurement. Further, the network component may also determine whether another network component of network components 2A-2E has already performed an active RTT measurement for signal 16. Based on this determination and/or the RSSI comparison above, the network component may determine that it should not perform an active RTT measurement, because one or more other network components of network components 2A-2E may be in a better position with respect to device 3 and/or may have already performed an RTT measurement.

As another example, a network component of network components 2A-2E may apply a rule that compares the RSSI of a previous broadcast signal from device 3 to the RSSI of signal 16 to determine whether device 3 is moving closer to network component 2A-2E. If device 3 is moving closer to the network component, the network component may determine to perform an RTT measurement. For example, the network component may apply a rule, such as if $RSSI_N$ - $RSSI_{N-1}$ > TH2, then perform an RTT measurement, where N and N-1 are different times when the RSSI of broadcast signals from device 3 were measured and TH2 is a determined threshold value that may be preprogrammed in the network component or reprogrammed into the network component via server 6.

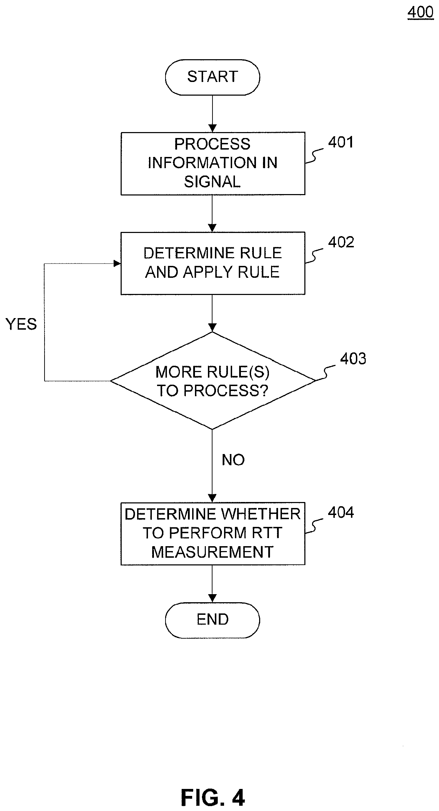

Other rules and parameters may be applied by a network component of network components 2A-2E, or other elements of system 100, such as server 6, to determine whether to perform an RTT measurement. FIG. 4 shows a flow chart of an exemplary determination process 400 that may be performed to determine whether to perform an RTT measurement, consistent with certain disclosed embodiments. In one example, one or more of network components 2A-2E may be configured to process information included in signal 16 to extract data that may be used by one or more rules (Step 401). For example, a network component may extract map ID information and/or cell ID information from signal 16. The map ID information and/or cell ID information may provide information about the location of device 3. Additionally or alternatively, a network component may extract other information, such as information from device 3 indicating a request for a certain quality of service level for determining its location.

In step 402, the network component may determine whether a rule exists to apply to signal 16, and if so, applies the rule, which may include using one or more parameters. Once the rule is performed, the results of the rule may be stored in memory in one or more of network components 2A-2E, or in server 6, for later processing. In one aspect, the network component may determine whether to apply another rule (Step 403). If the network component determines to apply another rule, the process returns to step 402. If not, the process continues to step 404, where the network component determines based on the results of the processed rules whether to perform an RTT measurement.

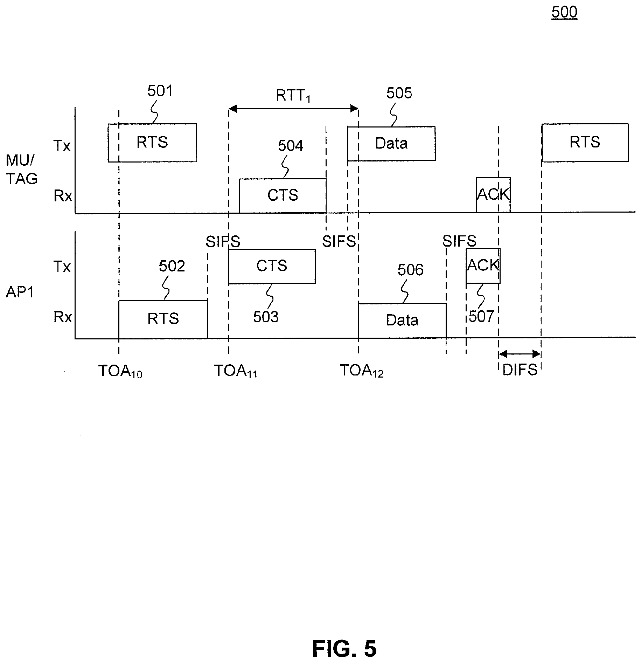

FIG. 5 depicts an exemplary sequence diagram 500 relating to an RTT measurement that uses Request to Send (RTS) and Clear to Send (CTS) messages with telemetry involving a first network component of network components 2A-2E. At 501, device 3 may transmit an RTS message. At 502, the first network component (which is exemplified as an AP1) receives the RTS message. After a period of time (Short Inter Frame Space - SIFS) has passed, at 503, a CTS message may be transmitted from the first network component. At 504, device 3 receives the CTS message and after a SIFS period of time has passed, at 505, device 3 may transmit data to the first network component. At 506, the first network component receives the data and may send an acknowledgement ACK at 507.

According to exemplary sequence 500, the RTT measurement (denoted as $RTT_1$) may be performed by the network component using the CTS message 503 and the subsequent data message 505. Other RTT measurements may be initiated by device 3 using a similar RTS/CTS sequence.

Other RTT measurements may comprise different sequences of messages, such as different data message and acknowledge message sequences and/or probe request and probe response sequences, although it should be clear that many other alternatives may be utilized.

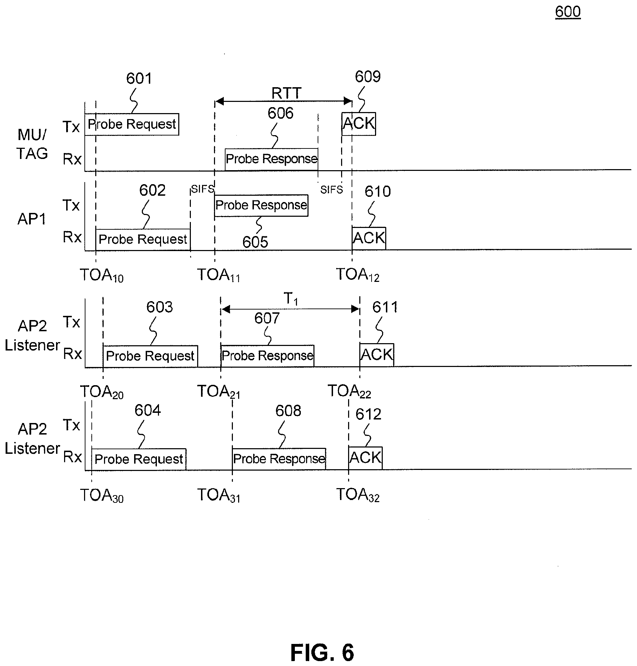

FIG. 6 depicts an exemplary sequence diagram 600 of another exemplary process for performing RTT measurement involving multiple network components of network components 2A-2E (three of which are exemplarily illustrated as AP1, AP2, and AP3) and a device 3 (exemplified as a mobile unit (MU) or a tag (TAG)). Although the example of FIG. 6 depicts three of network components 2A-2E (AP1-AP3), the disclosure is not so limited. In this example, an RTT measurement may be performed using a Probe Request message sequence. In this example, AP1 performs an active RTT measurement, while AP2 and AP3 perform a passive RTT measurement based on the signals received from both device 3 and AP1.

At 601, device 3 may broadcast a Probe Request message. At 602, 603, and 604, AP1, AP2, and AP3 may receive the Probe Request message, respectively. In the example of FIG. 6, AP2 and AP3 may be listener APs. That is, they may perform a passive RTT measurement by receiving messages from device 3 and/or from APs performing active RTT measurement, such as AP1 in the FIG. 6 example. After a SIFS has passed, at 605, the AP1 may transmit a Probe Response message. At 606, 607, and 608, device 3, AP2, and AP3 may receive the Probe Response message, respectively. After another SIFS period has passed, at 609, device 3 may transmit an acknowledgement message. At 610, 611, and 612, AP1, AP2, and AP3 may receive the acknowledgement message, respectively. In one embodiment, AP1 may then measure RTT by, for example, determining the round trip time between transmission of the Probe Request message 605 and reception of the acknowledgement message 610. AP2 or a server 6 may calculate the RTT between the second AP2 and device 3 by determining the time between reception of the Probe Response message 607 and reception of the acknowledgement message 611, knowing the distance between AP1 and AP2, and knowing the RTT between device 3 and AP1.

The RTT between device 3 and AP2 ($RTT_{AP2\text{-}dev}$) may be calculated as:

$$RTT_{AP2\text{-}dev} = 2 * (T_1 + T_{AP1\text{-}AP2}) - RTT_{AP1\text{-}dev},$$

where $T_1 = TOA_{22} - TOA_{21}$ ($T_1$ is marked in FIG. 6 and is the time elapsed at AP2 between the time of reception of the Probe Response message 607 transmitted by AP1 and the time of reception of the ACK message 611 transmitted by device 3), and where $T_{AP1\text{-}AP2}$ = signal propa-

gation time between AP1 and AP2, and $RTT_{AP1\text{-}dev}$ = round trip time between AP1 and device 3. Similarly, the RTT between device 3 and AP3 ($RTT_{AP3\text{-}dev}$) may be calculated as:

$$RTT_{AP3\text{-}dev} = 2 * (T_1 + T_{AP1\text{-}AP3}) - RTT_{AP1\text{-}dev}.$$

The APs may then transmit their measurement information to server 6 in accordance with the disclosed embodiments. Once server 6 has received this information, it may determine the location of device 3.

Although RTT measurement has been described as being performed on RTS/CTS sequences and Probe Request/Probe Response sequences, the disclosure is not so limited. For example, RTT measurement may additionally or alternatively be performed on data/acknowledgement message sequences, and other known message sequences.

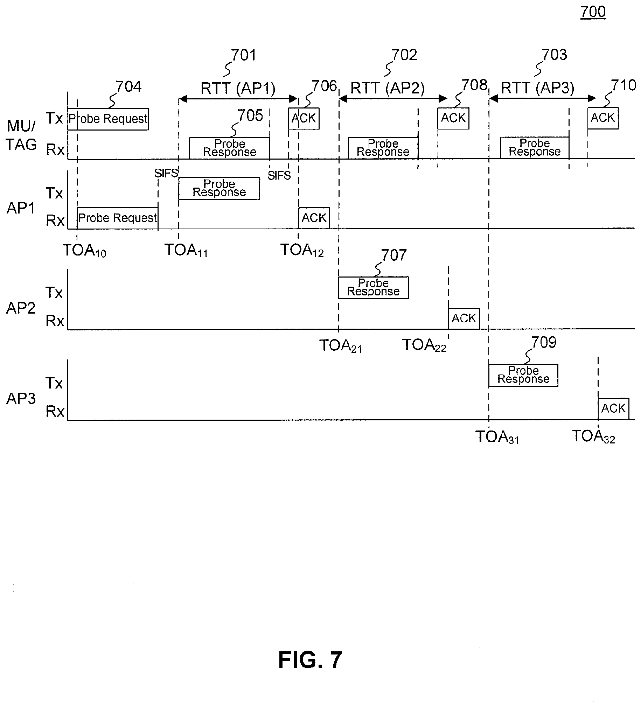

FIG. 7 depicts an exemplary sequence diagram 700 of another exemplary process for performing RTT measurement involving multiple network components of network components 2A-2E (exemplified as AP1, AP2, and AP3). Although the example of FIG. 7 depicts three of network components 2A-2E, the disclosure is not so limited. In this example, as also described in FIG. 6, an RTT measurement may be performed using a Probe Request message sequence. In this example AP1, AP2 and AP3 may perform an active RTT measurement (701-703).

At 704, device 3 may broadcast a Probe Request message. Then three RTT measurements may be sequentially performed by AP1, AP2, and AP3. AP1 may first perform an RTT measurement based on signals 705 and 706, AP2 may then perform an RTT measurement based on signals 707 and 708, and finally, AP3 may perform an RTT measurement based on signals 709 and 710.

The sequential ordering of the RTT measurements may be based on a measured RSSI of the Probe Request signal 704 at each of network components AP1-AP3 and/or other parameters as disclosed in the present invention. For example, the APs may perform RTT measurements in a sequential order starting with the AP measuring the strongest RSSI, and ending with the AP measuring the least strong RSSI. That is, an RTT measurement may first be performed by the AP measuring the strongest RSSI, an AP measuring the second strongest RSSI may perform a second RTT measurement, and so on.

FIG. 8 depicts an exemplary network component 800 consistent with the disclosed embodiments. In one embodiment, network component 800 may correspond to one or more network components of FIGS. 1A and 1B, such as network components 2A-2E. Network component 800 may be an access point or other type of network device or component that transmits and receives communications from other elements within a wireless network, such as one or more routers, servers, base stations, or other known network devices.

Data signals transmitted to and from network component 800 may be transmitted and received through a network interface unit 801. A processor 802 may be one or more known processing devices, such as a microprocessor, controller, or any other suitable type of processor. The functions of processor 802 may be provided on a single dedicated processor or by a plurality of processors. Processor 802 may be coupled to network interface unit 801, and a memory 803. Processor 802 may receive and/or transmit commands from/to other devices over one or more wireless networks, such as cellular, satellite, IEEE 802.11x, Wi-Fi, terrestrial, WiMax, or other wireless networks.

Memory 803 may be configured to store instructions and/or software that, when executed by processor 802, carry out the exemplary steps of the disclosed embodiments. Memory 803 may also store an operating system, applications, and/or parameters. Data stored on memory 803 may be stored in a single dedicated memory, or a plurality of memory devices. Memory 803 may be any type of physical, non-transient memory, volatile or non-volatile, removable or nonremovable, including, but not limited to, random access (RAM), read-only (ROM), magnetic storage, semiconductor storage, optical disc storage, magneto-optical disc storage, or other type of storage device or tangible computer-readable medium. In one embodiment, memory 803 may include one or more programs or subprograms that, when executed by a processor, perform various procedures, operations, or processes consistent with disclosed embodiments.

The foregoing descriptions have been presented for purposes of illustration and description. They are not exhaustive and do not limit the disclosed embodiments to the precise form disclosed. Modifications and variations are possible in light of the above teachings or may be acquired from practicing the disclosed embodiments. For example, the described implementation includes software, but the disclosed embodiments may be implemented as a combination of hardware and software. Additionally, although disclosed aspects are described as being stored in a memory on a computer, one skilled in the art will appreciate that these aspects can also be stored on other one or more other types of tangible computer-readable media, such as secondary storage devices, like hard disks, floppy disks, CD-ROMs, or other forms of RAM or ROM.

Computer programs based on the written description and disclosed methods are within the capabilities of one of ordinary skill in the art. The various programs or program modules may be created using any of the techniques known to one skilled in the art ,or may be designed in connection with existing software. For example, program sections or program modules can be designed in or by means of DirectX, .Net Framework, .Net Compact Framework, Visual Basic, C, XML, Java, C++, JavaScript, HTML, HTML/AJAX, or any other now known or later created programming language. One or more of such software sections or modules may be integrated into a computer system.

Other embodiments will be apparent to those skilled in the art from consideration of the specification and practice of the embodiments disclosed herein. As The recitations in the claims are to be interpreted broadly based on the language employed in the claims and are not limited to examples described in the present specification or during the prosecution of the application, which examples are to be construed non-exclusive. Further, the steps of the disclosed methods may be modified in any manner, including by reordering steps and/or inserting or deleting steps. As used herein, the indefinite articles "a" and "an" mean "one or more" in open-ended claims containing the transitional phrase "comprising," "including," and/or "having." Further, since numerous modifications and variations will readily occur to those skilled in the art, it is not desired to limit the disclosure to the exact construction and operation illustrated and described, and accordingly, all suitable modifications and equivalents may be resorted to, falling within the scope of the disclosure.

**Claims**

1. A computer-implemented method for locating a device (3) in a wireless network, comprising:

   receiving, by a network component (2), a signal (16) from the device (3);
   determining, by the network component (2), a signal strength of the received signal (16);
   determining, by the network component (2) or a server (6), whether to perform a first round trip time (RTT) measurement with the device (3) based on the signal strength of the received signal (16) and at least one parameter;
   performing, by the network component (2), the first RTT measurement with the device (3) based on the determination whether to perform the first RTT measurement; and
   providing, by the network component (2), a result of the first RTT measurement to a server (6) for determining a location of the device (3) based on the first RTT measurement;
   wherein the at least one parameter includes one or more of: location information of the device (3); data reflecting whether one or more network components (2) have performed an RTT measurement on the signal; data reflecting a quality of location measurement requested by the device (3) or a server (6); network load information; information relating to characteristics of the device (3); dilution counter information; information indicating whether a network component (2) is the only network component that received the signal (16); information reflecting a distance of the network component (2) from the device (3); and information reflecting whether the device (3) is moving toward a network component (2).

2. The method of claim 1, further comprising providing by a second network component (2) to the server (6) a second RTT measurement for the device (3) for determining the location of the device (3) based on the first RTT measurement and the second RTT measurement.

3. The method of claim 1, wherein determining whether to perform the first RTT measurement further includes determining whether to perform the first RTT measurement in a sequence of RTT measurements involving at least a second network component (2) based on the signal strength and the at least one parameter.

4. The method of any one of claims 1 or 3, wherein performing, by the network component (2), the first RTT measurement with the device (3) further comprises:

    transmitting a message to the device (3);
    receiving a response message from the device (3); and
    calculating a round trip time based on the time elapsed between transmission of the message and reception of the response message.

5. The method of any one of claims 1, 3, or 4, wherein the signal (16) is one of a Wi-Fi Probe Request message, a Request to Send message, or a data message.

6. The method of any one of claims 1, 3, 4 or 5, further comprising:

    determining that the signal strength of the received signal (16) is less than a received signal strength measured by one or more other network components (2); and
    deferring the first RTT measurement until an RTT measurement at the one or more other network components (2) is complete.

7. The method of any one of claims 1, 3, 4, 5, or 6, wherein determining, by the network component (2) or the server (6), whether to perform the first RTT measurement further comprises determining from the at least one parameter that the network component (2) is within a determined proximity of the device (3).

8. The method of any one of claims 1, 3, 4, 5, 6, or 7, wherein the network component (2) parses the at least one parameter from the signal.

9. The method of any one of claims 1, 3, 4, 5, 6, 7, or 8, wherein the network component (2) determines whether the device (3) is moving closer or further from the network component (2) based on the determined signal strength of the received signal.

10. A network component (2) configured for locating a device (3) in a wireless network, comprising:

    at least one memory device storing instructions; and
    at least one processor which, when executing the instructions, is configured to perform the method of any one of claims 1, 3, 4, 5, 6, 7, 8, or 9.

**Patentansprüche**

1. Computerimplementiertes Verfahren zur Lokalisierung einer Vorrichtung (3) in einem drahtlosen Netzwerk, umfassend:

    Empfangen, mittels einer Netzwerkkomponente (2), eines Signals (16) von der Vorrichtung (3);
    Bestimmen, mittels der Netzwerkkomponente (2), einer Signalstärke des empfangenen Signals (16);
    Bestimmen, mittels der Netzwerkkomponente (2) oder eines Servers (6), ob eine erste Umlaufzeit(RTT)-Messung mit der Vorrichtung (3) durchgeführt werden soll, basierend auf der Signalstärke des empfangenen Signals (16) und mindestens einem Parameter;
    Durchführen, mittels der Netzwerkkomponente (2), der ersten RTT-Messung mit der Vorrichtung (3) basierend auf der Bestimmung, ob die erste RTT-Messung durchgeführt werden soll; und
    Bereitstellen, mittels der Netzwerkkomponente (2), eines Ergebnisses der ersten RTT-Messung für einen Server (6) zum Bestimmen eines Standorts der Vorrichtung (3) basierend auf der ersten RTT-Messung;
    wobei der mindestens eine Parameter eines oder mehrere der Folgenden einschließt: Standortinformationen der Vorrichtung (3); Daten, die wiedergeben, ob eine oder mehrere Netzwerkkomponenten (2) eine RTT-Messung mit dem Signal durchgeführt haben; Daten, die eine Qualität einer Standortmessung wiedergeben, die von der Vorrichtung (3) oder einem Server (6) angefordert wird; Netzwerklastinformationen; Informationen im Zusammenhang mit Merkmalen der Vorrichtung (3); Verringerungszählerinformationen; Informationen, die anzeigen, ob eine Netzwerkkomponente (2) die einzige Netzwerkkomponente ist, die das Signal (16) empfangen hat; Informationen, die eine Entfernung der Netzwerkkomponente (2) von der Vorrichtung (3) wiedergeben; und Informationen, die wiedergeben ob sich die Vorrichtung (3) in Richtung einer Netzwerkkomponente (2) bewegt.

2. Verfahren nach Anspruch 1, das weiter ein Bereitstellen, mittels einer zweiten Netzwerkkomponente (2) für den Server (6), einer zweiten RTT-Messung für die Vorrichtung (3) umfasst, um den Standort der Vorrichtung (3) basierend auf der ersten RTT-Messung und der zweiten RTT-Messung zu bestimmen.

3. Verfahren nach Anspruch 1, wobei das Bestimmen, ob die erste RTT-Messung durchgeführt werden soll, weiter ein Bestimmen, ob die erste RTT-Messung in einer Folge von RTT-Messungen durchgeführt werden soll, unter Einbeziehung mindestens einer zweiten Netzwerkkomponente (2) basierend auf der Signalstärke und dem mindestens einen Parameter einschließt.

4. Verfahren nach einem der Ansprüche 1 oder 3, wobei das Durchführen, mittels der Netzwerkkomponente (2), der ersten RTT-Messung mit der Vorrichtung (3) weiter umfasst:

   Übertragen einer Nachricht an die Vorrichtung (3);
   Empfangen einer Antwortnachricht von der Vorrichtung (3); und
   Berechnen einer Umlaufzeit basierend auf der zwischen der Übertragung der Nachricht und dem Empfang der Antwortnachricht verstrichenen Zeit.

5. Verfahren nach einem der Ansprüche 1, 3 oder 4, wobei das Signal (16) eine von einer WLAN-Probenanforderungsnachricht, einer Sendeanforderungsnachricht oder einer Datennachricht ist.

6. Verfahren nach einem der Ansprüche 1, 3, 4 bis 5, weiter umfassend:

   Bestimmen, dass die Signalstärke des empfangenen Signals (16) geringer als Empfangssignalstärke ist, die mittels der einen oder den mehreren Netzwerkkomponenten (2) gemessen wird; und
   Aufschieben der ersten RTT-Messung, bis eine RTT-Messung an der einen oder den mehreren Netzwerkkomponenten (2) abgeschlossen ist.

7. Verfahren nach einem der Ansprüche 1, 3, 4, 5 oder 6, wobei das Bestimmen, mittels der Netzwerkkomponente (2) oder des Servers (6), ob die erste RTT-Messung durchgeführt werden soll, weiter ein Bestimmen aus dem mindestens einen Parameter, dass sich die Netzwerkkomponente (2) innerhalb einer bestimmten Nähe zu der Vorrichtung (3) befindet, umfasst.

8. Verfahren nach einem der Ansprüche 1, 3, 4, 5, 6 oder 7, wobei die Netzwerkkomponente (2) den mindestens einen Parameter aus dem Signal analysiert.

9. Verfahren nach einem der Ansprüche 1, 3, 4, 5, 6, 7 oder 8, wobei die Netzwerkkomponente (2) basierend auf der bestimmten Signalstärke des empfangenen Signals bestimmt, ob sich die Vorrichtung (3) der Netzwerkkomponente (2) nähert oder davon wegbewegt.

10. Netzwerkkomponente (2), die zur Lokalisierung einer Vorrichtung (3) in einem drahtlosen Netzwerk konfiguriert ist, umfassend:

   mindestens eine Speichervorrichtung, die Anweisungen speichert; und
   mindestens einen Prozessor, der, wenn er die Anweisungen ausführt, konfiguriert ist, das Verfahren nach einem der Ansprüche 1, 3, 4, 5, 6, 7, 8 oder 9 durchzuführen.

**Revendications**

1. Procédé mis en oeuvre par ordinateur pour localiser un dispositif (3) dans un réseau sans fil, comprenant :

   la réception par un composant de réseau (2) d'un signal (16) du dispositif (3) ;
   la détermination par le composant de réseau (2) d'une intensité du signal reçu (16) ;
   la détermination par le composant de réseau (2) ou un serveur (6) du fait de réaliser ou non une première mesure du temps d'aller-retour (RTT) avec le dispositif (3) sur la base de l'intensité du signal reçu (16) et d'au moins un paramètre ;
   la réalisation par le composant de réseau (2) de la première mesure RTT avec le dispositif (3) sur la base de la détermination de la réalisation ou non de la première mesure RTT; et
   la fourniture par le composant de réseau (2) d'un résultat de la première mesure RTT à un serveur (6) pour déterminer un emplacement du dispositif (3) sur la base de la première mesure RTT ;
   dans lequel le au moins un paramètre comprend un ou plusieurs des suivants : des informations de localisation du dispositif (3) ; des données reflétant le fait qu'un ou plusieurs composants de réseau (2) a ou ont effectué ou non une mesure RTT sur le signal ; des données reflétant une qualité de mesure de la localisation requise par le dispositif (3) ou un serveur (6) ; des informations de charge du réseau ; des informations se rapportant aux caractéristiques du dispositif (3) ; des contre-informations de dilution ; des informations indiquant si un composant de réseau (2) est le seul composant de réseau ou non qui a reçu le signal (16) ; des informations reflétant une distance du composant de réseau (2) en provenance du dispositif (3) ; et des informations reflétant le fait que le dispositif (3) se déplace ou non vers un composant de réseau (2).

2.  Procédé selon la revendication 1, comprenant en outre la fourniture par un second composant de réseau (2) au serveur (6) d'une seconde mesure RTT pour le dispositif (3) afin de déterminer la localisation du dispositif (3) sur la base de la première mesure RTT et de la seconde mesure RTT.

3.  Procédé selon la revendication 1, dans lequel la détermination du fait d'effectuer ou non la première mesure RTT comprend en outre la détermination du fait d'effectuer ou non la première mesure RTT dans une séquence de mesures RTT impliquant au moins un second composant de réseau (2) sur la base de l'intensité du signal et du au moins un paramètre.

4.  Procédé selon l'une quelconque des revendications 1 ou 3, dans lequel la réalisation par le composant de réseau (2) de la première mesure RTT avec le dispositif (3) comprend en outre :

    la transmission d'un message au dispositif (3) ;
    la réception d'un message de réponse du dispositif (3) ; et
    le calcul d'un temps d'aller-retour sur la base du temps écoulé entre la transmission du message et la réception du message de réponse.

5.  Procédé selon l'une quelconque des revendications 1, 3 ou 4, dans lequel le signal (16) est l'un parmi un message de demande de sonde Wi-Fi, un message de demande d'envoi ou un message de données.

6.  Procédé selon l'une quelconque des revendications 1, 3, 4 ou 5, comprenant en outre :

    la détermination que l'intensité du signal reçu (16) est inférieure à une intensité de signal reçu mesurée par un ou plusieurs autres composants de réseau (2) ; et
    le retardement de la première mesure RTT jusqu'à ce qu'une mesure RTT dans les un ou plusieurs autres composants de réseau (2) soit complète.

7.  Procédé selon l'une quelconque des revendications 1, 3, 4, 5 ou 6, dans lequel la détermination par le composé de réseau (2) ou le serveur (6) du fait d'effectuer ou non la première mesure RTT comprend en outre la détermination à partir du au moins un paramètre que le composé de réseau (2) se situe dans une proximité déterminée du dispositif (3).

8.  Procédé selon l'une quelconque des revendications 1, 3, 4, 5, 6 ou 7, dans lequel le composant de réseau (2) analyse le au moins un paramètre à partir du signal.

9.  Procédé selon l'une quelconque des revendications 1, 3, 4, 5, 6, 7 ou 8, dans lequel le composant de réseau (2) détermine si le dispositif (3) se déplace ou non plus près ou plus loin du composant de réseau (2) sur la base de l'intensité déterminée du signal reçu.

10. Composant de réseau (2) configuré pour localiser un dispositif (3), dans un réseau sans fil, comprenant :

    au moins un dispositif de mémorisation stockant des instructions ; et
    au moins un processeur qui, lorsqu'il exécute les instructions, est configuré pour effectuer le procédé selon l'une quelconque des revendications 1, 3, 4, 5, 6, 7, 8 ou 9.

100

| | | |
|---|---|---|
| NETWORK COMPONENT 2D | DEVICE 3 | NETWORK COMPONENT 2E |

16

16

16

| | | |
|---|---|---|
| NETWORK COMPONENT 2A | NETWORK COMPONENT 2B | NETWORK COMPONENT 2C |

SERVER
6

# FIG. 1A

**FIG. 1B**

200

```
        ┌─────────┐
        │  START  │
        └────┬────┘
             │
             ▼
  ┌──────────────────────┐
  │  RECEIVE BROADCAST   │  ⌇ 201
  │  SIGNAL FROM DEVICE  │
  └──────────┬───────────┘
             │
             ▼
  ┌──────────────────────┐
  │  MEASURE THE RSSI    │  ⌇ 202
  │  OF RECEIVED SIGNAL  │
  └──────────┬───────────┘
             │
             ▼
        ╱╲╲╲╲╲╲╲╲╲╱╲
      ╱                 ╲
     ╱  DETERMINE WHETHER ╲   ⌇ 203
    ◄   TO PERFORM AN RTT   ►
     ╲     MEASUREMENT    ╱
      ╲                 ╱
        ╲╱╲╱╲╱╲╱╲╱╲╱
             │ YES
             ▼
  ┌──────────────────────┐
  │   PERFORM RTT        │  ⌇ 204
  │   MEASUREMENT        │
  └──────────┬───────────┘
             │
             ▼
  ┌──────────────────────┐
  │   REPORT RTT         │  ⌇ 205
  │   MEASUREMENT TO     │
  │   SERVER             │
  └──────────┬───────────┘
             │
             ▼
        ┌─────────┐
 NO────►│   END   │
        └─────────┘
```

# FIG. 2

START

300

RECEIVE SIGNAL BY A
PLURALITY OF NETWORK
COMPONENTS

301

AT LEAST TWO OF THE NETWORK COMPONENTS MEASURE THE
RSSI OF THE RECEIVED SIGNAL AND DETERMINE BASED ON THE
RSSI OF THE SIGNAL AND/OR ONE OR MORE PARAMETERS
WHETHER TO PERFORM AN RTT MEASUREMENT WITH THE DEVICE

302

AT LEAST ONE
NETWORK COMPONENT THAT
DETERMINED TO PERFORM AN ACTIVE
RTT MEASUREMENT?

303

NO

YES

MORE THAN
ONE NETWORK COMPONENT
TO PERFORM AN ACTIVE RTT
MEASUREMENT?

304

NO

YES

NETWORK
COMPONENT
PERFORMS ACTIVE
RTT MEASUREMENT

305

NETWORK
COMPONENTS
PERFORM ACTIVE RTT
MEASUREMENTS

307

REPORT RTT
MEASUREMENT TO
SERVER

306

REPORT RTT
MEASUREMENTS TO
SERVER

308

SERVER DETERMINES
LOCATION OF DEVICE
BASED ON REPORTED
RTT MEASUREMENTS

309

END

**FIG. 3**

400

```
        ┌─────────┐
        │  START  │
        └────┬────┘
             │
             ▼
   ┌──────────────────┐
   │     PROCESS      │  ⌇ 401
   │  INFORMATION IN  │
   │      SIGNAL      │
   └────────┬─────────┘
            │
            ▼
   ┌──────────────────┐
   │  DETERMINE RULE  │  ⌇ 402
   │  AND APPLY RULE  │
   └────────┬─────────┘
            │
            ▼
          ╱────╲
YES     ╱        ╲
  ┌────╱  MORE RULE(S) ╲  ⌇ 403
  │    ╲  TO PROCESS?  ╱
  │      ╲           ╱
  │        ╲────────╱
  │            │
  │            │ NO
  │            ▼
  │  ┌──────────────────┐
  │  │ DETERMINE WHETHER│  ⌇ 404
  │  │  TO PERFORM RTT  │
  │  │   MEASUREMENT    │
  │  └────────┬─────────┘
  │           │
  │           ▼
  │       ┌─────────┐
  │       │   END   │
  │       └─────────┘
```

# FIG. 4

FIG. 5

600

601                    RTT              609
                 ┌──────────┐
                      606
MU/   Tx │Probe Request│        │ACK│
TAG   Rx                 │Probe Response│

                 SIFS              SIFS    610
              602  ┌──────────────┐
AP1   Tx          │Probe Response│
      Rx │Probe Request│              │ACK│
                      605

      TOA₁₀         TOA₁₁         TOA₁₂

                         T₁         611
              603   ┌──────────┐
AP2   Tx              607
Listener Rx │Probe Request│ │Probe Response│  │ACK│

      TOA₂₀         TOA₂₁         TOA₂₂

              604          608       612
AP2   Tx
Listener Rx │Probe Request│  │Probe Response│ │ACK│

      TOA₃₀         TOA₃₁         TOA₃₂


# FIG. 6

FIG. 7

**FIG. 8**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9205672 A